# EUROPEAN PATENT SPECIFICATION

(11) **EP 2 973 831 B1**
(45) Date of publication and mention of the grant of the patent: **04.05.2022**
(21) Application number: 14773345.5
(22) Date of filing: 10.03.2014
(51) Int. Cl.: H01M 10/04, H01M 4/04, H01M 10/0583, H01M 50/46, H01M 10/0565

(54) **ELECTROCHEMICAL CELL INCLUDING A FOLDED ELECTRODE, COMPONENTS THEREOF, BATTERY INCLUDING THE ELECTROCHEMICAL CELL, AND METHOD OF FORMING SAME**
ELEKTROCHEMISCHE ZELLE MIT GEFALTETER ELEKTRODE, KOMPONENTEN DAVON, BATTERIE MIT DIESER ELEKTROCHEMISCHE ZELLE UND VERFAHREN ZUR HERSTELLUNG DAVON
PILE ÉLECTROCHIMIQUE COMPRENANT UNE ÉLECTRODE PLIÉE, COMPOSANTS ASSOCIÉS, BATTERIE COMPRENANT LA PILE ÉLECTROCHIMIQUE ET SON PROCÉDÉ DE FORMATION

(30) Priority: 14.03.2013 US 201313831266
(43) Date of publication of application: 20.01.2016
(73) Proprietor: Sion Power Corporation, Tucson, AZ 85756 (US); Robert Bosch GmbH, 70442 Stuttgart (DE)
(72) Inventor: KRETSCHMAR, Thomas, 96050 Bamberg (DE); BOTOS, Ernest, Dezso, Vail, AZ 85541 (US)
(74) Representative: Pallini Gervasi, Diego
(86) International application number: PCT/US2014/022831
(87) International publication number: WO 2014/159281

(56) References cited:
- JP-A- 2005 174 653
- JP-A- 2011 138 675
- JP-A- 2011 138 675
- US-A- 3 350 239
- US-A- 4 948 685
- US-A1- 2002 034 688
- US-A1- 2002 122 987
- US-A1- 2011 183 203
- US-A1- 2012 070 746

## Description

### CROSS REFERENCE TO RELATED APPLICATION

This application claims priority to U.S. Patent Application Serial No. 13/831,266, filed on March 14, 2013.

### FIELD OF THE INVENTION

The present invention generally relates to electrochemical cells and batteries including the cells. More particularly, the invention relates to electrochemical cells including one or more folded electrodes, electrochemical cell components, batteries including the electrochemical cells, and to methods of forming the electrochemical cells, components, and batteries.

### BACKGROUND OF THE INVENTION

A typical battery includes one or more electrochemical cells to store electrical energy. Each electrochemical cell includes an anode (negatively charged electrode during discharge of the cell), a cathode (positively charged electrode during discharge of the cell), an electrolyte between the anode and the cathode, and also typically includes a separator between the anode and cathode to, among other things, keep the anode and cathode from contacting each other.

An amount of electrical charge an electrochemical cell can store is related to the electrochemical system, which is a combination of reactive and nonreactive materials, an amount of electrode material and/or electrolyte material available for an electrochemical reaction. Generally, the greater the amount of available electrode and/or electrolyte material, the greater the charge capacity. In addition, larger electrode surface area decreases the internal resistance of the battery and can improve diffusion processes, which enables discharging and charging the battery at relatively large currents and improves other charge and discharge properties of the cell. Techniques to provide electrochemical cells with additional electrode surface and thereby improve cell performance include winding layers of the cell into a cylindrical or flat shape to form a wound cell and stacking multiple layers of cells on top of one another to form a stacked cell.

Wound electrochemical cells are typically formed by layering anode, separator, and cathode layers adjacent each other, e.g., from continuous rolls of the respective layers, and then winding the layers to form a cylindrical structure. The cylindrical structure can be flattened to form a flat pack structure, which may better conform to design configurations of devices that use the batteries including the cells. Because the wound cells can be formed from continuous rolls of materials, manufacturing wound electrochemical cells is a relatively inexpensive way to form electrochemical cells having relatively high charge capacity and other desired properties. However, wound electrochemical cells and batteries including the cells may experience an inhomogeneous distribution of pressure and force caused by a volume change of portions of the cell during charge and discharge of the cell; this is especially true when a wound cell is compressed into a flat pack. This change in pressure may reduce the performance of the battery, the safety of the battery, and/or the lifetime of the battery.

Stacked cells are formed by placing multiple structures, each including an anode, separator, and cathode layer, in a vertical stack. Compared to would cells, stacked cells are relatively expensive to manufacture, because pre-cut or formed sheets of the anode, separator, and cathode layers must be separately formed and then stacked upon one another, which requires time-consuming, precise handling and alignment of the layers. In addition, the equipment required to precisely place each layer is relatively expensive. However, cells and batteries formed using this technique exhibit relatively homogeneous force distribution caused by any volume change of the cell during charge and discharge of the cell. Thus, such cells may exhibit increased performance, lifetime, and safety compared to similar cells formed using wound cell technology.

Another technique used to form electrochemical cells includes using a z-fold or accordion fold of one or more layers of the electrochemical cell. Using a z-fold technique may be advantageous compared to winding layers of a cell, because folding techniques may allow for more homogeneous pressure and force distribution within the cells; however, the equipment and time required for folding cell layers is generally greater than for winding the cell layers. Folding techniques may be advantageous over stacking methods, because at least some of the layers of cells can be derived from continuous or semi-continuous sheets of materials, whereas all layers of a stacked cell are pre-cut; however, the pressure distribution within a cell including folded layers may not be as uniform as within stacked cells.

U.S. Publication No. 2012/0208066 A1, published August 16, 2012, in the name of Schaefer et al., discloses a z-fold technique used in forming an electrode stack of an electrochemical cell. The disclosed method includes a continuous layer of z-folded separator material and cathode and anode electrode plates that are interposed between z-folded layers of the separator material. Although the electrochemical cells disclosed in Schaefer et al. have some advantages over purely stacked electrochemical cells, the cells of Schaefer et al. still require precise formation and alignment of both anode and cathode plates of the cells.

PCT Publication No. WO 2009/078632 A2, published June 25, 2009, in the name of LG CHEM., LTD., discloses a battery that includes a plurality of overlapping electrochemical cells, wherein each cell includes a cathode, an anode, and a separator, and a continuous separator sheet is disposed between the overlapping electrochemical cells. While the disclosed cells have the advantage of being surrounded by a continuous sheet of separator material, the cells still require precise formation and alignment of the cathode, separator, and anode plates on top of the continuous sheet of separator material.

JP Publication No. 09017441 A, published January 17, 1997, in the name of Kazuhiro, discloses a square battery having a z-folded anode layer and a z-folded cathode layer, wherein the cathode layer is directly coated with a continuous coating of separator material. The battery also includes a current collector that extends vertically and horizontally to prevent the polar sheets from shifting. The current collector is purported to have an advantage of not requiring tabs on electrodes. However, the current collector disclosed in Kazuhiro adds considerable weight and volume to the battery. In addition, the cell disclosed in Kazuhiro does not appear to include any overlap of the negative electrode relative to the positive electrode, which may yield cells that are relatively unsafe.

Although z-fold or accordion fold techniques for various layers within an electrochemical have been developed, the techniques still include additional steps, alignment of multiple plates, relatively difficult manufacturing steps, and/or add additional volume and weight to the cell. Accordingly, improved electrochemical cells, components thereof, batteries including the improved electrochemical cells, and methods of forming the cells, components, and batteries are desired. Prior art documents US3 350 239 and US3 216 859 disclose electrochemical cells with folded geometry.

### SUMMARY OF THE INVENTION

The present disclosure generally relates to electrochemical cells, components thereof, batteries including the cells. More particularly, various embodiments of the disclosure relate to electrochemical cells including a first electrode (e.g., an anode or a cathode), a second electrode (e.g., a cathode or an anode), and a separator between the first electrode and the second electrode, wherein two or more of the first electrode, the separator, and the second electrode form an integrated structure layer and the integrated structure layer and optionally another electrode layer include a z-fold or accordion fold, to components of such electrochemical cells, to batteries including the cells, and to methods of forming the components, cells, and batteries. The use of the integrated folded layers allows for the relatively easy and inexpensive manufacture of cells with starting materials in the form of, for example, a continuous or semi-continuous roll, tape, or web and supports interlinked or linked production processes.

According to the present invention, there is provided an integrated electrode/separator structure layer in accordance with claim 1.

In accordance with yet additional embodiments of the invention, an electrochemical cell according to claim 3 is provided.

Preferred embodiments are described by the dependent claims.

### BRIEF DESCRIPTION OF THE DRAWING FIGURES

The exemplary embodiments of the present invention will be described in connection with the appended drawing figures, in which:
FIG. 1 illustrates an integrated electrode/separator structure layer in accordance with exemplary embodiments of the disclosure.
FIG. 2 illustrates a method of forming an integrated electrode/separator structure layer in accordance with exemplary embodiments of the disclosure.
FIG. 3 illustrates a portion of an electrochemical cell in accordance with exemplary embodiments of the disclosure.
FIG. 4 illustrates a method of forming an electrochemical cell in accordance with exemplary embodiments of the disclosure.
FIG. 5 illustrates another method of forming an electrochemical cell in accordance with exemplary embodiments of the disclosure.
FIG. 6 illustrates a first electrode/separator/second electrode structure layer in accordance with exemplary embodiments of the disclosure.
FIG. 7 illustrates a method of forming a first electrode/separator/second electrode structure layer in accordance with exemplary embodiments of the disclosure.

It will be appreciated that the figures are not necessarily drawn to scale. For example, the dimensions of some of the elements in the figures may be exaggerated relative to other elements to help to improve understanding of illustrated embodiments of the present invention.

### DETAILED DESCRIPTION OF PREFERRED EMBODIMENTS OF THE INVENTION

The description of exemplary embodiments of the present invention provided below is merely exemplary and is intended for purposes of illustration only; the following description is not intended to limit the scope of the invention disclosed herein.

As set forth in more detail below, exemplary electrochemical cells and batteries including the cells of the present disclosure are advantageous over electrochemical cells including wound or stacked cells. The electrochemical cells described herein are relatively easy to manufacture, have a relatively high energy density, and are safe, compared to other electrochemical cells having one or more z-folded layers. The electrochemical cells described below can be used with a variety of electrochemical cell technologies, including lithium ion cells, lithium polymer cells, nickel metal hydride cells, lithium sulfur cells, lithium air cells, lithium oxygen cells, and the like.

As set forth in more detail below, exemplary cells include an integrated electrode/separator layer, rather than a separate carrier layer for an electrode layer. Not using a separate carrier layer simplifies methods of forming electrochemical cells and provides cells having increased energy density, compared to cells including the additional carrier layer. When a traditional carrier layer is used (e.g., for an anode), a typical process requires delaminating of the carrier layer and relaminating and introducing a separator layer. These additional steps can be avoided using techniques described herein.

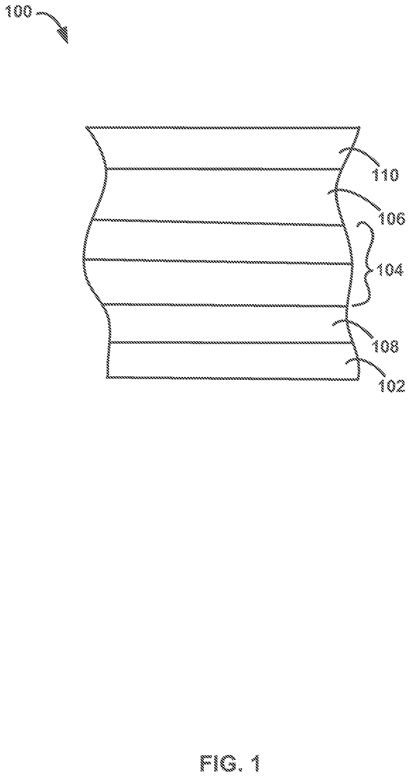

FIG. 1 illustrates a portion of an integrated electrode/separator structure layer 100 in accordance with exemplary embodiments of the disclosure. Integrated electrode/separator structure layer 100 includes a separator layer 102, optionally one or more protective layers 104 overlying separator layer 102, and an electrode active material 106 overlying one or more protective layers 104. As illustrated, integrated electrode/separator structure layer 100 may also include a gel layer 108 interposed between one or more protective layers 104 and the separator layer 102 and/or optionally a current collector layer 110 overlying electrode active material 106.

Separator layer 102 may be formed of any material suitable for use as an electrochemical cell separator. For example, layer 104 may include solid non-conductive or insulative materials that separate or insulate the anode and the cathode from each other. The separator may include pores, which may be partially or substantially filled with electrolyte.

A variety of separator materials are known in the art. Examples of suitable solid porous separator materials include, but are not limited to, polyolefins, such as, for example, polyethylenes and polypropylenes, glass fiber filter papers, and ceramic materials. Further examples of separators and separator materials suitable for use with cells described herein are those comprising a microporous xerogel layer, for example, a microporous pseudo-boehmite layer, which may be provided either as a free-standing film or by a direct coating application on one of the electrodes. Solid electrolytes may also function as a separator in addition to their electrolyte function of permitting the transport of ions between the anode and the cathode. By way of particular example, separator layer 102 is formed of highly chemical and temperature stable material, such as polyethylene terephthalate (PET) from Kapton.

One or more protective layers 104 may include materials used in formation of an electrochemical cell electrode. For example, one or more protective layers 104 may include a multilayer structure, including one or more single ion conducting layers and polymer layers. For example, the one or more protective layers 104 may include three or more layers, wherein each of the three or more layers comprises a layer selected from the group consisting of single ion conducting layers and polymer layers. Exemplary single ion conducting layers include a glass selected from the group consisting of lithium silicates, lithium borates, lithium aluminates, lithium phosphates, lithium phosphorus oxynitrides, lithium silicosulfides, lithium germanosuifides, lithium lanthanum oxides, lithium tantalum oxides, lithium niobium oxides, lithium titanium oxides, lithium borosulfides, lithium aluminosulfides, and lithium phosphosulfides and combinations thereof. Exemplary polymer layers include electrically conductive polymers, ionically conductive polymers, sulfonated polymers, and hydrocarbon polymers. In one embodiment the polymer layers comprise a crosslinked polymer. In one embodiment, the polymer layer of the multi-layer structure comprises a polymer layer formed from the polymerization of one or more acrylate monomers selected from the group consisting of alkyl acrylates, glycol acrylates, and polyglycol acrylates. The one or more protective layers may also include a metal alloy layer-e.g., including a metal selected from the group consisting of Zn, Mg, Sn, and Al, which may be interposed between the other layers of the multi-layer structure or may form the outer layer of the structure. Various suitable protective layers are described in disclosed in United States Patent No. 7,771,870 to Affinito et al., issued August 10, 2010, entitled "Electrode Protection in Both Aqueous and Non-Aqueous Electrochemical Cells, Including Rechargeable Lithium Batteries" and United States Patent No. 8,197,971 to Skotheim et al., issued June 12, 2012, entitled "Lithium Anodes for Electrochemical Cells". .

Electrode active material 106 may include any suitable anode or cathode active material. Suitable active anode materials include lithium metal and lithium alloys, such as lithium-aluminum alloys and lithium-tin alloys. Exemplary suitable active cathode materials include electroactive transition metal chalcogenides, electroactive conductive polymers, and electroactive sulfur-containing materials, and combinations thereof. The respective active materials may also include binders, fillers, and conductive material. By way of example, electrode active material includes lithium metal.

Gel layer 108 may include a solid polymer (e.g., a solid polymer electrolyte), a glassy-state polymer, or a polymer gel. Specific examples of appropriate polymers include, but are not limited to, polyoxides, poly(alkyl oxides), polyvinyl alcohols, polyvinyl butyral, polyvinyl formal, vinyl acetate-vinyl alcohol copolymers, ethylene-vinyl alcohol copolymers, and vinyl alcohol-methyl methacrylate copolymers, polysiloxanes, and fluorinated polymers.

Current collector layer 110 may be formed of a metal, such as copper and or nickel. Alternatively, current collector 110 may be formed of a conductive polymer.

One or more protective layers 104, electrode active material 106, gel layer 108, and current collector 110 may be formed on a first surface of separator layer 102 or be formed on both a first and second surface of separator layer 102.

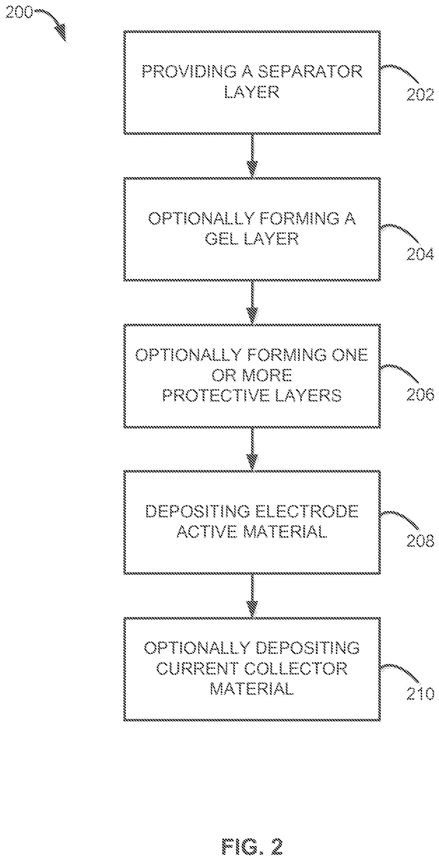

FIG. 2 illustrates a method 200 of forming an integrated electrode/separator structure layer in accordance with exemplary embodiments of the disclosure. Method 200 includes the steps of providing a separator layer (step 202), optionally forming a gel layer on the separator layer (step 204), forming one or more protective layers overlying the separator layer (step 206), depositing electrode active material over the one or more protective layers (step 208), and optionally depositing current collector material over the electrode active material (step 210).

Step 202 may include providing any of the separator materials describe above in connection with separator layer 102. By way of example, step 202 includes providing separator material from a continuous or semi-continuous source.

Optional step 204 includes depositing gel material onto the separator layer. The gel layer may be formed by, for example, roll to roll coating, slot and knife coating or other coating and deposition methods. The gel coating could go on wet or dry. In the latter case, the coating could be swollen with electrolyte to form a gel.

One or more protective layers may be deposited during step 206 using any suitable method, such as, but not limited to physical deposition methods, chemical vapor deposition methods, extrusion, and electroplating. Deposition may be carried out in a vacuum or inert atmosphere. For example a single ion conducting layer may be deposited by a method selected from the group consisting of sputtering, electron beam evaporation, vacuum thermal evaporation, laser ablation, chemical vapor deposition, thermal evaporation, plasma enhanced chemical vacuum deposition, laser enhanced chemical vapor deposition, and jet vapor deposition. And, a polymer layer may be deposited by a method selected from the group consisting of electron beam evaporation, vacuum thermal evaporation, laser ablation, chemical vapor deposition, thermal evaporation, plasma assisted chemical vacuum deposition, laser enhanced chemical vapor deposition, jet vapor deposition, and extrusion. The polymer layer may also be deposited by spin-coating methods or flash evaporation methods. Flash evaporation methods are particularly useful for deposition of crosslinked polymer layers. A particular method for deposition of crosslinked polymer layers is a flash evaporation method, for example, as described in United States Patent No. 4,954,371 to Yializis, issued September 4, 1990, entitled "Flash Evaporation of Monomer Fluids." A method for deposition of crosslinked polymer layers comprising lithium salts is a flash evaporation method, for example, as described in United States Patent No. 5,681,615 to Affinito et al., issued October 28, 1997, entitled "Vacuum Flash Evaporated Polymer Composites."

During step 208, electrode active material is deposited onto the one or more protective layers. The electrode active material may be deposited using any suitable thin-film or other deposition or coating technique as well as laminating to the substrate, such as thermal evaporation, sputtering, jet vapor deposition, and laser ablation. In one embodiment, electrode active material is deposited by thermal evaporation.

Similarly, during step 210, the optional current collector material may be deposited using any suitable thin-film technique, such as plating or vacuum deposition, such as thermal or plasma chemical vapor deposition, physical vapor deposition, pulsed laser deposition, or the like. Any of the films described herein can also be deposited using knife coating or screen printing techniques.

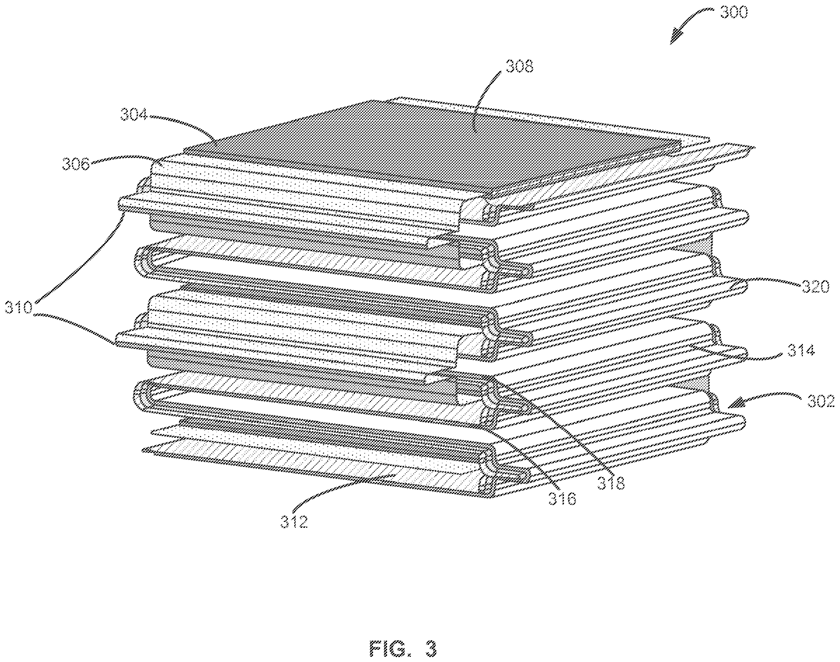

Turing now to FIG. 3, a portion of an electrochemical cell 300, including an integrated electrode/separator structure layer, such as integrated electrode/separator structure layer 100, is illustrated. Cell 300 includes integrated electrode/separator structure layer 302, including a separator layer 312, an electrode active material 314, and contact regions 320, and a second electrode layer 304. Integrated electrode/separator structure layer 302 and second electrode layer 304 are orthogonally z-folded with respect to each other, such that integrated electrode/separator structure layer 302 is orthogonal to second electrode layer 304. As used herein, the term orthogonal means ninety degrees or substantially ninety degrees, such that the first electrode and separator layers can be z-folded with respect to each other.

Although not illustrated, electrochemical cells may also include a suitable electrolyte and/or contacts to integrated electrode/separator structure layer 302 and/or second electrode layer 304. Further, the electrochemical cells described herein or portions thereof may include additional electrode and separator layers not illustrated in the figures. All of the layers of cell 300 are folded and may originate from continuous or semi-continuous sources. Accordingly, cell 300 is relatively easy and inexpensive to manufacture. In addition, because all of the layers are folded, the cell is less likely to experience inhomogeneous pressure distribution within the cell, and therefore the cell is relatively safe, compared to similar flat packs.

Second electrode layer 304 may include any of the materials described above in connection with electrode active material. Layer 304 may be of solid material or may have electrode active material coated onto a substrate. For example, layer 304 may include a substrate 306 (e.g., a current collector) and be intermittently coated on one side or both sides (as illustrated) with active material 308. Layer 304 may also include contact areas or regions 310, which may be at least partially not coated with active material, such that contact can be made to uncoated sections of areas 310. As noted above and as illustrated in FIG. 3, separator layer 312 may overlap electrode active material 314 to provide additional protection for example against short circuit for cell 300. In accordance with other embodiments, a cell may include one or more second electrode plates, rather than second electrode layer 304, which may be wholly or partially coated on one or both sides.

In the illustrated example, cell 300 includes a first integrated electrode/separator structure layer section 316 and second electrode layer 304 overlying first integrated electrode/separator structure layer section 316. Second electrode layer 304 is placed in an orthogonal direction relative to first integrated electrode/separator structure layer section 316 and first integrated electrode/separator structure layer section 316 is folded back over itself to form a second integrated electrode/separator structure layer section 318 adjacent the first integrated electrode/separator structure layer section 316. The folding of integrated electrode/separator structure layer 302 creates two adjacent integrated electrode/separator structure layer 302 sections. However, the cell configuration allows for continuous sources of integrated electrode/separator structure layer 302 and second electrode 304 materials from, for example, a roll, tape, or web of the respective materials, which allows for relatively easy and inexpensive manufacture of cell 300, without requiring precise placement or cutting of individual sheets of electrode material. Alternatively, as noted above, rather than a continuous or semi-continuous source of second electrode layer material, the second electrode layer may include one or more plates interposed, for example, between the opening formed between first integrated electrode/separator structure layer section 316 and second integrated electrode/separator structure layer section 318.

Cell 300 may include contacts to the first electrode layer within electrode/separator structure layer 302 and similarly to second electrode layer 304 (e.g., in area 310). Contacts to first electrode layer within electrode/separator structure layer 302 and second electrode layer 304 (e.g., at area 310) may include any suitable form, such as a contact formed my welding, adhesives, and/or mechanical penetration.

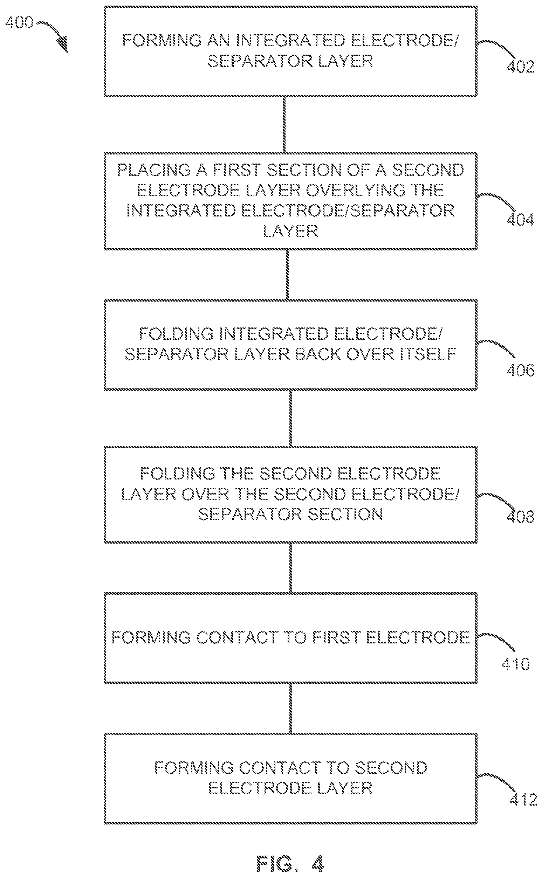

FIG. 4 illustrates a method 400 of forming an electrochemical cell, such as electrochemical cell 300. Method 400 includes the steps of forming an integrated electrode/separator layer (step 402), placing a first section of a second electrode layer overlying the integrated electrode/separator layer (step 404), folding the integrated electrode/separator layer over the first section of the second electrode layer and back over itself to form a first electrode/separator layer section and a second electrode/separator layer section (step 406) and folding the second electrode layer over the second electrode/separator layer section (step 408). The folding steps may be repeated to form a desired number of electrode/separator layer sections and second electrode sections. Once the folding is complete, method 400 may optionally include forming contact to first electrode (e.g., of an integrated electrode/separator structure layer) (step 410) and/or forming contact to the second electrode layer (step 412).

Step 402 includes forming an integrated electrode/separator layer, such as layer 100 described above in connection with FIG. 1. Step 402 may include, the method described above in connection with FIG. 2.

During step 404, a first section of a second electrode layer is placed overlying the integrated electrode/separator layer.

During step 406, the integrated electrode/separator layer is folded over the first section of the second electrode layer and back over itself to form a first electrode/separator layer section and a second electrode/separator layer section. Any of the folded layers described herein may be folded using, for example, moving rolls, knives, or other devices. The drive and movement mechanism of a layer can be performed using, for example, cam-control and/or with linear mechanical, electrical, or magnetic drives.

Then, during step 408, the second electrode layer is folded over the second electrode/separator layer section to form a second second electrode section overlying the second integrated electrode/separator layer section.

Steps 402-408 may be repeated until a desired number of electrode/separator layer sections and second electrode sections are formed. The cell may then be flattened to decrease the volume of the cell and to produce flattened regions (e.g., regions 310 and 320).

Method 400 may additionally include steps of providing separator material at the bottom and/or at the top of the electrochemical cell. Providing a cell with separator material at the top and/or bottom may provide addition isolation for the cell from other cells and/or battery components.

Method 400 may also optionally include a step of forming a contact to the first electrode (step 410) and/or a step of forming a contact to a second electrode layer (step 412). During step 410, contact to a first electrode may be formed at folded region 320 of integrated electrode/separator structure layer 302 by, for example, using a penetrating device to create a hole through the layer and then forming a conductive contact through the hole, welding, or conductive adhesive techniques. During step 412, contact to the second electrode may be formed by, for example, welding, adhesives, and/or mechanical penetration techniques on a contact area or region 320 of a second electrode material plate.

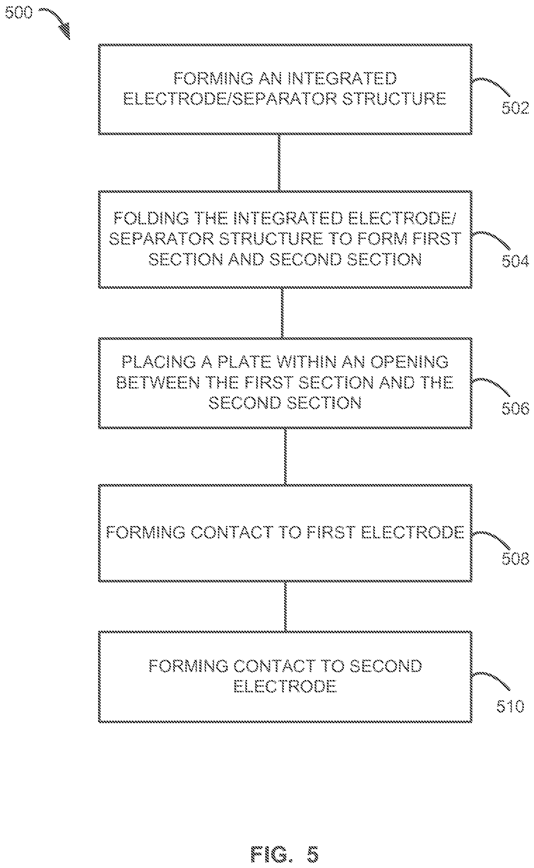

FIG. 5 illustrates another method 500 of forming an electrochemical cell in accordance with exemplary embodiments of the disclosure. Method 500 is similar to method 400, except method 500 includes use of a second electrode plate, rather than a folded electrode. Method 500 includes the steps of forming an integrated electrode/separator structure layer (step 502), folding the integrated electrode/separator layer back onto itself to form a first integrated electrode/separator layer section a second integrated electrode/separator layer section, and a first opening there between (step 504), and placing a first plate comprising second electrode material within the opening (step 506).

During step 502, an integrated electrode/separator structure layer is formed-e.g., using the method described above in connection with FIG. 2. After the integrated electrode/separator structure layer is formed, the layer is folded back over itself to form a first integrated electrode/separator structure layer section and a second integrated electrode/separator structure layer section during step 504. Next, rather than orthogonally folding the second electrode into the folded integrated electrode/separator structure layer, a plate of second electrode material is placed within the opening between the first integrated electrode/separator structure layer section and the second integrated electrode/separator structure layer section. Step 506 may be performed before or after step 504. The folding steps may be repeated to form a desired number of electrode/separator layer sections and second electrode sections. Once the folding is complete, method 500 may optionally include forming contact to first electrode (step 508) and/or forming contact to the second electrode layer (step 510), which may be the same or similar to steps 410-412.

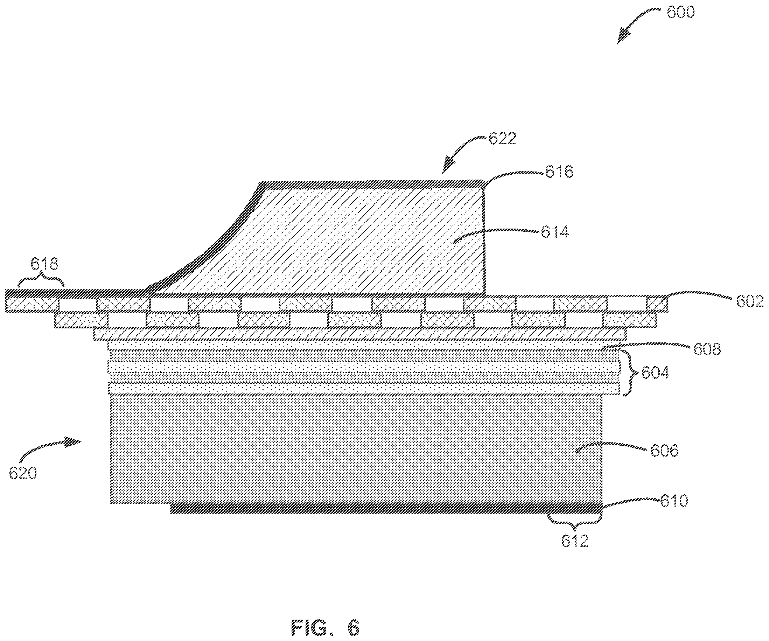

FIG. 6 illustrates a folded first electrode/separator/second electrode structure layer 600 in accordance with yet additional embodiments of the invention. First electrode/separator/second electrode structure layer 600 is similar to integrated electrode/separator structure layer 100, except first electrode/separator/second electrode structure layer 600 also includes a second electrode structure formed on the surface of the separator. As illustrated, structure 600 includes a separator layer 602, one or more protective layers 604, electrode active material 606, optionally a gel layer 608, optionally a first electrode current collector 610, having a contact area 612, and second electrode active material 614, and optionally second electrode current collector 616, having a contact area 618.

Layers 602-610 may be the same or similar to layers 102-110 described above in connection with FIG. 1. In the illustrative example, electrode active material 606 covers only a portion of one or more protective layers 604, and first electrode current collector 610 covers only a portion of electrode active material 606.

Second electrode active material 614 may include any electrode active material described herein. For example, second electrode active material 614 may include cathode electrode active material, such as sulfur and additional materials, such as binders and additional conductive material. Second electrode current collector 616 may comprise any of the material described above in connection with current collector 110. In the illustrated example, second electrode current collector 616 covers at least a portion of second electrode active material 614 and a portion of a surface of separator layer 602.

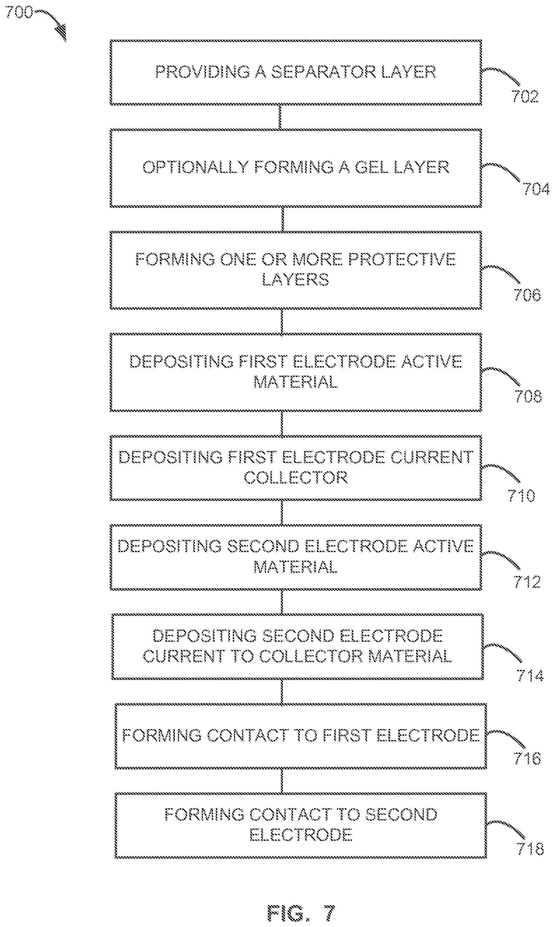

FIG. 7 illustrates a method 700 of forming a first electrode/separator/second electrode structure layer in accordance with exemplary embodiments of the disclosure. Method 700 may be a continuation of method 200-i.e., a first electrode structures may be formed on a surface of a separator layer according to method 200 and then additional steps of method 700 may be used to form second electrode structure on the separator layer.

Method 700 includes the steps of providing a separator layer (step 702), optionally forming a gel layer on a first portion of a surface of the separator layer (step 704), forming one or more protective layers over the first portion of the surface (step 706), depositing first electrode active material over the one or more protective layers (step 708), optionally depositing first electrode current collector material onto the first electrode active material (step 710), depositing second electrode active material over a second portion of the surface of the separator layer (step 712) and optionally depositing second electrode current collector material onto the second electrode active material (step 714). Method 700 may also include steps of forming contact to a first electrode (step 716) and forming contact to a second electrode (step 718). Steps 702-710 may be the same or similar to steps 202-210.

During step 712, second electrode active material is deposited onto the separator layer on a second portion of the surface. The second electrode active material may be deposited using any of the techniques described above in connection with step 208. Similarly, depositing second electrode current collector material onto the second electrode active material, step 714, may include any of the techniques described above in connection with step 210. Steps 716-718 may include the same of similar steps as described above in connection with steps 410-412 and 508-510. The various layers may be patterned using a mask during deposition, using deposition and etch, or selectively depositing materials to form first electrode structure 620 and second electrode structure 622, illustrated in FIG. 6.

When the electrode active material includes cathode active material, a first or second electrode structure can be formed using motion of a coating blade or indexing a coating roll, masking, and/or using depositing and etch techniques. Similarly, when the electrode active material includes anode active material, an electrode structure can be formed using, for example, vacuum deposition and lift-off, selective deposition, printing, or other suitable techniques.

An electrochemical cell can be formed by folding a first electrode/separator/second electrode structure layer formed in accordance with method 700 onto itself to form alternating first electrode structures 620 and second electrode structures 622. An electrochemical cell may include any desired number of first electrode structures and second electrode structures, and may include separator material at a top and/or bottom of a cell.

The present invention has been described above with reference to a number of exemplary embodiments and examples. It should be appreciated that the particular embodiments shown and described herein are illustrative of the exemplary embodiments of the invention, and are not intended to limit the scope of the invention. It will be recognized that changes and modifications may be made to the embodiments described herein without departing from the scope of the present invention as defined in the claims. These and other changes or modifications are intended to be included within the scope of the invention.

## Claims

1. An integrated electrode/separator structure layer suitable for forming an electrochemical cell with integrated folded layers comprising:
a separator layer;
one or more protective layers comprising a multi-layered structure comprising a single-ion conductive layer and a polymer layer deposited_overlying the separator layer;
an electrode active material deposited overlying the one or more protective layers, and a current collector layer overlaying the electrode active material,
wherein the separator layer, the one or more protective layers and the electrode active material form an integrated structure,
wherein the integrated structure includes one or more Z-folds to form adjacent sections of the separator layer; and wherein the integrated electrode/separator structure comprises folded flattened contact regions at least partially not coated with active material to form contact to the current collector.

2. The integrated electrode/separator structure layer of claim 1, wherein the separator layer overlaps the electrolyte material.

3. An electrochemical cell comprising:
an integrated electrode/separator structure layer of claim 1; and
a second electrode layer comprising a plate.

4. The electrochemical cell of claim 3, wherein the integrated electrode/separator layer is folded back over itself in a first direction to form a first integrated electrode/separator structure layer section and a second integrated electrode/separator structure layer section and the second electrode layer is placed between the first integrated electrode/separator structure layer section and the second integrated electrode/separator structure layer section.

5. The electrochemical cell of claim 3, wherein the second electrode layer comprises a current collector at least partially not coated with active material, such that contact can be made to the current collector.

## Patentansprüche

1. Integrierte Elektroden/Separator-Strukturschicht, die dafür geeignet ist, eine elektrochemische Zelle mit integrierten gefalteten Schichten zu bilden, wobei die Elektroden/Separator-Strukturschicht umfasst:
eine Separatorschicht;
eine oder mehrere Schutzschichten, die eine Mehrschichtstruktur umfassen, die eine für einzelne Ionen leitfähige Schicht und eine über der Separatorschicht liegend abgelagerte Polymerschicht umfasst;
ein aktives Elektrodenmaterial, das über der einen oder den mehreren Schutzschichten liegend abgelagert ist, und eine Stromabnehmerschicht, die über dem aktiven Elektrodenmaterial liegt,
wobei die Separatorschicht, die eine oder die mehreren Schutzschichten und das aktive Elektrodenmaterial eine integrierte Struktur bilden,
wobei die integrierte Struktur eine oder mehrere Z-Faltungen enthält, um benachbarte Abschnitte der Separatorschicht zu bilden; und wobei die integrierte Elektroden/Separator-Struktur gefaltete abgeflachte Kontaktgebiete umfasst, die wenigstens teilweise nicht mit aktivem Material beschichtet sind, um einen Kontakt zu dem Stromabnehmer zu bilden.

2. Integrierte Elektroden/Separator-Strukturschicht gemäß Anspruch 1, wobei die Separatorschicht das Elektrolytmaterial überlappt.

3. Elektrochemische Zelle, die umfasst:
eine integrierte Elektroden/Separator-Strukturschicht gemäß Anspruch 1; und
eine zweite Elektrodenschicht, die eine Platte umfasst.

4. Elektrochemische Zelle gemäß Anspruch 3, wobei die integrierte Elektroden/Separator-Schicht in einer ersten Richtung über sich selbst zurückgefaltet ist, um einen ersten integrierten Elektroden/Separator-Strukturschichtabschnitt und einen zweiten integrierten Elektroden/Separator-Strukturschichtabschnitt zu bilden, und wobei die zweite Elektrodenschicht zwischen dem ersten integrierten Elektroden/Separator-Strukturschichtabschnitt und dem zweiten integrierten Elektroden/Separator-Strukturschichtabschnitt angeordnet ist.

5. Elektrochemische Zelle gemäß Anspruch 3, wobei die zweite Elektrodenschicht einen Stromabnehmer umfasst, der wenigstens teilweise nicht mit aktivem Material beschichtet ist, so dass ein Kontakt mit dem Stromabnehmer hergestellt werden kann.

## Revendications

1. Couche de structure d'électrode/de séparation intégrée adaptée pour former une pile électrochimique avec des couches pliées intégrées comprenant :
une couche de séparation ;
une ou plusieurs couches de protection comprenant une structure multicouche comprenant une couche conductrice à ion unique et une couche de polymère déposée recouvrant la couche de séparation ;
un matériau actif d'électrode déposé recouvrant la ou les couches de protection, et
une couche de prise de courant recouvrant le matériau actif d'électrode,
où la couche de séparation, la ou les couches de protection et le matériau actif d'électrode forment une structure intégrée,
où la structure intégrée comprend un ou plusieurs pliages en Z pour former des sections adjacentes de la couche de séparation, et où la structure d'électrode/de séparation intégrée comprend des zones de contact aplaties et pliées au moins partiellement non enduites avec un matériau actif pour former un contact avec la prise de courant.

2. Couche de structure d'électrode/de séparation intégrée selon la revendication 1, où la couche de séparation recouvre le matériau électrolytique.

3. Pile électrochimique comprenant :
une couche de structure d'électrode/de séparation intégrée selon la revendication 1 ; et
une seconde couche d'électrode comprenant une plaque.

4. Pile électrochimique selon la revendication 3, où la couche de structure d'électrode/de séparation intégrée est repliée sur elle-même dans une première direction pour former une première section de couche de structure d'électrode/de séparation et une seconde section de couche de structure d'électrode/de séparation et la seconde couche d'électrode est placée entre la première section de couche de structure d'électrode/de séparation et la seconde section de couche de structure d'électrode/de séparation.

5. Pile électrochimique selon la revendication 3, où la seconde couche d'électrode comprend une prise de courant au moins partiellement non enduite avec un matériau actif, pour qu'un contact puisse être établi avec la prise de courant.
